# EUROPÄISCHE PATENTSCHRIFT

(11) **EP 0 482 542 B1**
(45) Veröffentlichungstag und Bekanntmachung des Hinweises auf die Patenterteilung: **19.07.1995**
(21) Anmeldenummer: 91117904.2
(22) Anmeldetag: 21.10.1991
(51) Int. Cl.: H01T 1/20, H01T 4/04

(54) **Überspannungsableiter**
Overvoltage arrester
Dérivateur de surtension

(30) Priorität: 25.10.1990 DE 4033927
(43) Veröffentlichungstag der Anmeldung: 29.04.1992
(73) Patentinhaber: Hoechst CeramTec Aktiengesellschaft, 95100 Selb (DE)
(72) Erfinder: Dietrich, Volker, Dr., D-90552 Röthenbach (DE); Do-Thoi, Tha, Dr., D-90552 Röthenbach (DE); Stingl, Peter, Dr., D-91207 Lauf-Kuhnhof (DE)
(74) Vertreter: Hoffmann, Peter, Dipl.-Chem.

(56) Entgegenhaltungen:
- EP-A- 0 087 820
- WO-A-82/01792
- US-A- 4 491 893

## Beschreibung

Die Erfindung betrifft einen Überspannungsableiter, der aus einem rohrförmigen Keramikteil als Isolator mit stirnseitig aufgelöteten Metallelektroden besteht, wobei jede Metallelektrode mit jeweils einer mindestens auf der Innenwand des Keramikteils aufgebrachten Zündhilfe elektrisch verbunden ist.

Überspannungsableiter der genannten Art sind bekannt. Nachteilig bei diesen Überspannungsableitern ist, daß durch die Vorbelotung der Stirnflächen des rohrförmigen Keramikteils die für eine Lotverbindung mit den Metallelektroden erforderlich ist, an der Innenkante der Verbindungsfläche ein Lotüberstand entsteht, der in den Innenraum des Keramikteils ragt. Beim Auftragen der Zündhilfe, im allgemeinen aus Graphit auf die Innenwand des Keramikteils wird die Auftrageinrichtung durch den Lotüberstand beschädigt, so daß in vielen Fällen keine elektrische Verbindung zwischen Zündhilfe und Vorbelotung zustande kommt. Außerdem muß die Auftrageinrichtung neu gerichtet werden, was störend für einen automatisierten Ablauf des Auftragens der Zündhilfe ist.

Hier will die Erfindung Abhilfe schaffen. Die Aufgabe wird durch besondere Gestaltung der Verbindungsflächen des Keramikteils mit den Metallelektroden erreicht, die dadurch gekennzeichnet ist, daß die Innenkanten der Verbindungsflächen des Keramikteils mit den Elektroden jeweils mit einer Fase versehen sind, deren Fasenwinkel (α) 15 bis 60° und deren auf die Ebene der Verbindungsfläche projizierte Breite (b) 0,05 bis 0,4 mm beträgt.

Bevorzugt beträgt der Fasenwinkel α 45° und die projizierte Breite b der Fase 0,1 mm.

Durch die Gestaltung der Verbindungsflächen des Keramikteils wird ein Lotüberstand bei der Vorbelotung, die beispielsweise nach den aus der DE-A 38 24 900 bekannten Verfahren ausgeführt wird, mit allen seinen Nachteilen für das Auftragen der Zündhilfe mit automatisierten Einrichtungen vermieden.

Im folgenden wird die Erfindung anhand der Zeichnungen, die lediglich einen Ausführungsweg darstellen, näher erläutert. Es zeigt
- Figur 1: Den prinzipiellen Aufbau eines Überspannungsableiters geschnitten und
- Figur 2: die Einzelheit "Z" der Figur 1 ohne Elektrode mit Vorbelotung.

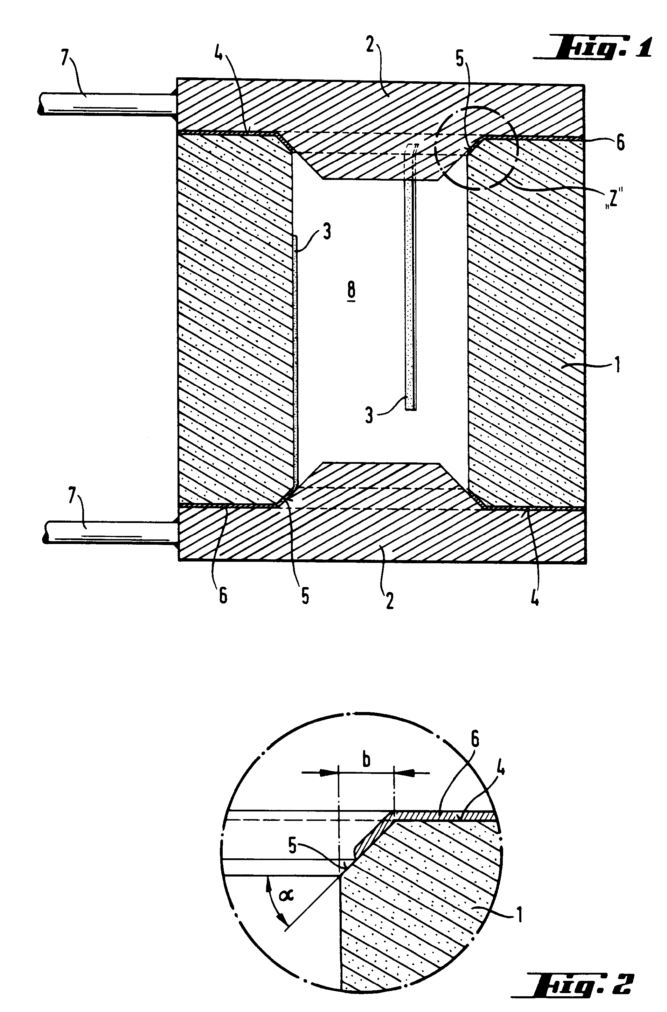

Der Überspannungsableiter besteht aus einem rohrförmigen Keramikteil 1, z. B. aus Al₂O₃ als Isolator. Auf den ringförmigen Stirnflächen des Keramikteils 1 sind Metallelektroden 2 aufgelötet. Diese Metallelektroden sind elektrisch mit jeweils einer Zündhilfe 3 verbunden, die auf der Innenwand des Keramikteils angebracht ist. Die Innenkanten der Verbindungsflächen 4 des Keramikteils 1 sind mit Fasen 5 versehen. Der Winkel α der Fase bezogen auf die Verbindungsfläche kann 15 bis 60°, vorzugsweise 45° betragen, die auf der Ebene der Verbindungsfläche 4 projizierte Breite b der Fasen 5 0,05 bis 0,4 mm, vorzugsweise 0,1 mm. Die Verbindungsflächen 4 des Keramikteils 1 sowie teilweise auf die Fasen 5 sind wie üblich durch Vorbeloten metallisiert (Lotschicht 6), um eine gasdichte und festhaftende Lotverbindung zwischen Elektroden und Keramik zu gewährleisten. Der Innenraum 8 des Überspannungsableiters kann mit einem Gas, z. B. einem Edelgas gefüllt sein. Sieben deuten die elektrischen Anschlüsse für die Elektroden 2 an. Durch die Fasen 5 an den Innenkanten des Keramikteils 1 wird ein Lotüberhang vermieden. Die Metallisierung 6 endet auf den Fasen, ohne die Kante zur Innenwand des Keramikteils zu erreichen. Darüber hinaus ist der Übergang Metallisierung Keramik nahezu stetig, so daß eine funktionsfähige Zündhilfe 3 mit elektrischer Verbindung zur Metallisierung auf die Innenwand des Keramikteils aufgebracht werden kann.

## Patentansprüche

1. Überspannungsableiter bestehend aus einem rohrförmigen Keramikteil (1) als Isolator mit stirnseitig aufgelöteten Metallelektroden (2), wobei jede Metallelektrode mit jeweils einer mindestens auf der Innenwand des Keramikteils aufgebrachten Zündhilfe (3) elektrisch verbunden ist, dadurch gekennzeichnet, daß die Innenkanten der Verbindungsflächen (4) des Keramikteils (1) mit den Elektroden (2) jeweils mit einer Fase (5) versehen sind, deren Fasenwinkel (α) 15 bis 60° und deren auf die Ebene der Verbindungsfläche (4) projizierte Breite (b) 0,05 bis 0,4 mm beträgt.

2. Überspannungsableiter nach Anspruch 1, dadurch gekennzeichnet, daß der Fasenwinkel (α) 45° und die projizierte Breite (b) 0,1 mm beträgt.

## Claims

1. A surge voltage protector consisting of a tubular ceramic part (1) as insulator having metal electrodes (2) soldered onto the end faces, each metal electrode being electrically connected in each case to an ignition aid (3) applied at least to the inside wall of the ceramic part, wherein the inside edges of the surfaces (4) joining the ceramic part (1) to the electrodes (2) are each provided with a chamfer (5) whose chamfer angle (α) is 15 to 60° and whose width (b) projected onto the plane of the joining surface (4) is 0.05 to 0.4 mm.

2. The surge voltage protector as claimed in claim 1, wherein the chamfer angle (α) is 45° and the projected width (b) is 0.1 mm.

## Revendications

1. Parafoudre consistant en und partie en céramique (1) de forme tubulaire servant d'isolateur, sur laquelle des électrodes métalliques (2) sont brasées côté frontal, chaque électrode métallique étant connectée électriquement respectivement à un allumeur auxiliaire (3) applique au moins sur la paroi intérieure de la partie en céramique, caractérisé en ce que les arêtes intérieures des sufaces de liaison (4) de la partie en céramique (1) comportant des électrodes (2) sont pourvues respectivement d'un chanfrein (5) dont l'angle (α) est compris entre 15 et 60° et dont la largeur (b) projetée sur le plan de la surface de liaison (4) est comprise entre 0,05 et 0,4 mm.

2. Parafoudre selon la revendication 1, caractérisé en ce que l'angle du chanfrein (α) est de 45° et la largeur (b) projetée de 0,1 mm.
